# EUROPÄISCHE PATENTANMELDUNG

(11) **EP 1 772 259 A1**
(43) Veröffentlichungstag der Anmeldung: **11.04.2007**
(21) Anmeldenummer: 06021014.3
(22) Anmeldetag: 06.10.2006
(51) Int. Cl.: B32B 5/26

(54) **Spinnvlies-Filmlaminat**

(30) Priorität: 07.10.2005 DE 102005048443
(71) Anmelder: Linotec Development GmbH, 06449 Aschersleben (DE)
(72) Erfinder: Klausen, Thomas, Dr., 31224 Peine (DE); Ehrenfried, Gruber, 47623 Kevelaer (DE); Zirkler, Wolfram, 39245 Pretzien (DE)
(74) Vertreter: Maxton Langmaack & Partner

(57) **Zusammenfassung**

Die vorliegende Erfindung betrifft ein Laminat mit zumindest einer ersten Lage aus einem Spinnvlies aus thermoplastischem Polyolefinmaterial und einer zweiten Lage aus einem flüssigkeitsundurchllässigen und dampfdurchlässigen Film aus Polyolefinmaterial, wobei die erste und die zweite Lage miteinander verbunden, biaxial verstreckt und elastisch sind.

## Beschreibung

Die vorliegende Erfindung betrifft ein Laminat mit zumindest einer ersten Lage aus einem Spinnvlies aus thermoplastischem Polyolefinmaterial und einer zweiten Lage aus einem Film.

Es ist bekannt, dass Filme und Vliese in Kombination sich ergänzen können. Während beispielsweise der Film besondere Eigenschaften hinsichtlich einer Flüssigkeitsundurchlässigkeit bei gleichzeitiger Gewichtsreduktion bieten kann, weist ein Vlies im Vergleich zu einem Film in der Regel eine höhere Festigkeit auf. Eine Kombination von einem Vlies mit einem Film bietet insbesondere die Möglichkeit, flüssigkeitsundurchlässige Laminate zu schaffen, die gleichzeitig leichtgewichtig sind und trotzdem eine gewisse Stabilität bei Beanspruchung bieten.

Aus der US 2003/00 50 589 A1 ist es bekannt, ein elastischen Element für die Herstellung einer Umhüllung beispielsweise für einen Finger zu verwenden. Für die Umhüllung sei ein Basismaterial zu nutzen, welches typischerweise ein Vlies wäre. Des Weiteren kann das Basismaterial auch verschiedene weitere Materialen, wie beispielsweise elastomere Komponenten aufweisen. Darunter seien insbesondere verschiedene Laminate wie elastische Laminate und Filmlaminate zu verstehen. Beispielsweise seien geeignete elastische Laminate, so genannte "stretch-bonded" und "neck-bonded" Laminate. Die jeweilige Definition dieser beiden Materialien sieht vor, dass ein elastisches Material mit einem nicht elastischen Material verbunden wird.

Aus der US 6,368,444 geht eine Verstreckvorrichtung hervor, mittels der Filme, Vliese oder Laminate gleichzeitig in CD- und MD-Richtung verstreckt werden sollen. Die Vorrichtung soll geeignet sein, besonders mit Füllstoff gefüllte Filme geeignet verstrecken zu können. Auch sollen mit der Vorrichtung elastomere Vliese verstreckbar sein. Bei Laminaten werden die sogenannte "neck-stretch" Laminate verreckt, bei denen eine Lage aus einem elastischem Material und die andere Lage aus einem nichtelastischem Material bestehen.

Aus der WO 99/55 942 A1 ist es bekannt, ein mit Füllmaterial versehenes Polymer auf ein Stapelvlies zu extrudieren, was anschleißend verstreckbar sein solle. Eine Faser des Stapelvlieses solle homogene oder inhomogene Phasengemische innerhalb der Faser durch verschiedene Polypropylen- und Polyethylen-Materialien aufweisen, um damit eine Festigkeit für eine Verstreckung in CD zu erhalten.

Aufgabe der vorliegenden Erfindung ist es, einen Einsatzbereich für Laminate mit Filmen und Vliesen zu verbreitern.

Diese Aufgabe wird mit einem Laminat mit den Merkmalen des Anspruches 1, mit einem Verfahren mit den Merkmalen des Anspruches 16 und mit einer Anlage mit den Merkmalen des Anspruches 21 gelöst. Weitere vorteilhafte Ausgestaltungen und Weiterbildungen sind in den jeweiligen Unteransprüchen angegeben.

Es wird ein Laminat vorgeschlagen, welches zumindest eine erste Lage aus einem Spinnvlies aus thermoplastischem Polyolefinmaterial und eine zweite Lage aus einem flüssigkeitsundurchlässigen und dampfdurchlässigen Film aus Polyolefinmaterial aufweist, wobei die erste und die zweite Lage miteinander verbunden, biaxial verstreckt und elastisch sind. Insbesondere sind die erste und die zweite Lage vollflächig miteinander verbunden. Dieses wird beispielsweise durch ein Extrudieren des Filmmaterials auf das Spinnvlies geschaffen. Unterstützt werden kann die Verbindung zwischen Spinnvlies und Filmmaterial durch Bereitstellung einer elektrostatischen Aufladevorrichtung. Mittels dieser kann eine verbesserte Haftung zwischen den Lagen geschaffen werden. Die Anordnung der Lagen kann unterschiedlich gestaltet sein. Beispielsweise kann das Filmmaterial der zweiten Lage zumindest teilweise in Poren des Spinnvlieses eindringen. Gemäß einer anderen Ausgestaltung ist vorgesehen, dass die zweite Lage und deren Filmmaterial nur vollflächig auf der ersten Lage aufliegt, ohne jedoch in das Spinnvlies selbst einzudringen.

Eine weiter verbesserte Haftung der Lagen aneinander wird durch die Auswahl der Polymere beider Lagen bewirkt. Vorzugsweise sind diese vom Schmelzpunktbereich und/oder Erweichungsbereich derart angenähert, dass es zu einem Verkleben der aneinanderliegenden Oberflächen beider Lagen kommt. Hierzu können die Materialien beispielsweise einzeln oder zusammen zumindest auf eine Erweichungstemperatur von einem der an der Oberfläche einer Lage verwendeten Materials erhitzt werden. Gemäß einer Weiterbildung ist vorgesehen, beide Lagen auf eine Temperatur zu erhitzen, dass zumindest jeweils ein Material einer Lage an der Oberfläche über seine jeweilige Erweichungstemperatur erhitzt ist. Gemäß einer Ausgestaltung ist vorgesehen, dass die Temperierung bis unterhalb von zumindest einer Schmelzpunkttemperatur von einem der an der Oberfläche einer Lage angeordneten Polymers erfolgt. Vorzugsweise wird hierbei die Schmelzpunkttemperatur des Filmmaterials als Grenze ausgefasst. Gemäß einer anderen Ausgestaltung ist vorgesehen, dass die Temperierung bis oberhalb einer Schmelztemperatur von jeweils einem Material an einer Oberfläche der Lagen vorgesehen ist. Dadurch ist in jeder Lage ein Material oberhalb der Schmelztemperatur aufgeizt, wodurch sich ein intensives Verbacken der Materialien ergibt.

Eine Temperierung kann beispielsweise über die Extrusion des Filmmaterials erfolgen. Auch kann eine separate Temperierung hierzu vorgesehen sein. Diese kann beispielsweise über Wärmestrahlung erfolgen, zum Beispiel über Infrarotstrahler oder andere Heizstrahler. Auch kann ein Wärmeeintrag in das Material über beispielsweise ein oder mehrere beheizte Walzen erfolgen.

Eine Weiterbildung sieht vor, dass das elastische Material nach dem biaxialen Verstrecken weiterhin auf beiden Seiten eben ist und insbesondere das Vlies keine Buckel aufwirft. Ein Verstrecken wird beispielsweise soweit ausgeführt, dass das Vlies und/oder der Film sich zumindest annähernd gleich verformen, insbesondere sich auch annähernd gleich plastisch sich verformen. Dadurch kann nach einem biaxalen Verstrecken des Laminats dieses vorzugsweise zumindest auf einer Seite, insbesondere auf beiden Seiten weiterhin flach bleiben. Eine andere Ausgestaltung hingegen sieht vor, dass beide Lagen - Vlies und Film - jeweils so verstreckt werden, dass die plastische Verformung bei beiden Lagen eintritt, aber ungleichmäßig. Auf diese Weise kann beispielsweise eine Wellung des Laminats erzielt werden, die über beide Seiten sich erstreckt. Beispielsweise lässt sich diese bei sich anschließenden elastischem Ziehen des Materials wieder in eine flache Geometrie verwandeln.

Eine Ausgestaltung sieht vor, dass das eine elastische Eigenschaft einer Vlieslage zumindest annähernd gleich zu der der Filmlage ist. Das bedeutet, dass ein Übergang zu einem plastischen bzw. nichtelastischem Verhalten bei etwa gleicher Verstreckung erfolgt. Ein Bereich von 10% Abweichung nach oben wie nach unten beim Vergleich beider Verstreckgrenzen sei hierbei mitumfasst und als in etwa gleich aufzufassen. Eine andere Ausgestaltung sieht vor, dass eine der beiden Lagen eine deutlich bessere elastische Eigenschaft aufweist als die andere Lage. Beispielsweise kann die eine Lage um zumindest 30% mehr verstreckt werden als die andere Lage und sich trotzdem noch im elastischem Bereich befinden.

Eine Unterstützung der Haftung erfolgt vorzugsweise, indem ein oder mehrere zusätzliche Bindungen zwischen der ersten und der zweiten Lage ausgeführt werden. Eine Bindung kann beispielsweise mittels eines Thermobondingschrittes, mittels eines Vernadelns, mittels einer Wasserstrahlverfestigung oder Ultraschallverschweißens zusätzlich ausgeführt werden. Dabei wird vorzugsweise eine Fläche von weniger als 20% der Oberfläche des Laminats für eine derartige zusätzliche Verbindung genutzt. Auf diese Weise bleibt die flüssigkeitsundurchlässige und dampfdurchlässige Eigenschaft des Laminats erhalten.

Eine Weiterbildung sieht vor, dass das Spinnvlies ebenfalls in der gleichen Anlage hergestellt wird, in der auch der Film hergestellt wird. Auf diese Weise gelingt es, flexibel unterschiedliche Laminatdicken mit jeweils unterschiedlichen ersten und zweiten Lagen herstellen zu können. Diese Flexibilität erlaubt es, unterschiedliche elastische Laminate mit einer einzigen Anlage mit den gleichen Ausgangsmaterialien herstellen zu können, ohne einen Wechsel der Ausgangsmaterialien vorsehen zu müssen.

Gemäß einer ersten Ausgestaltung ist vorgesehen, dass das Spinnvlies ein Bikomponentenspinnvlies mit einem Kern aufweist, der im Wesentlichen Polypropylen aufweist, und einen Mantel aus insbesondere zum überwiegenden Teil Polyethylen hat, wobei der Film der zweiten Lage vorzugsweise aus Polyethylen ist. Vorzugsweise ist der Film aus Polyethylen auch mikroporös. Gemäß einer anderen Ausgestaltung ist der Film aus einem flüssigkeitsdichten Material, das eine Absorption und Desorption von Feuchtigkeit ermöglicht, wodurch eine Dampfdurchlässigkeit des Films und damit des Laminats sichergestellt ist. Beispielsweise kann das Filmmaterial Polymethan aufweisen. Das Filmmaterial kann ein Homopolymer oder ein Copolymer aufweisen, wie auch ein- oder mehrlagig sein.

Eine weitere Ausgestaltung sieht vor, dass das Spinnvlies des Bikomponentenvlieses der ersten Lage im Kern Polypropylen und Polyethylen aufweist, während der Mantel vorzugsweise vollständig aus Polyethylen ist. Vorzugsweise ist vorgesehen, dass das Kernmaterial des Spinnvlieses zumindest 90 Gew.-% Polypropylen aufweist und einen Anteil Polyethylen hat. Beispielsweise beträgt der Anteil Polyethylen im Kern weniger als 5%, vorzugsweise weniger als 3%. Vorzugsweise wird der Polyethylenanteil dem Polypropylen zugegeben, um eine Elastizität des Bikomponentenvlieses für insbesondere hohe Elastizitätsgrade erzielen zu können. Insbesondere mit einem derartigen Bikomponentenspinnvlies als erste Lage einsetzbar ist ein Film, der ein Polyethylen-Compound aufweist, das zumindest mit 30 Gew.-% füllstoffgefüllt ist. Bevorzugt ist, wenn ein Film Verwendung findet, der aus Polyethylen ist und einen Füllstoffanteil von zumindest 45 Gew.-% hat. Auf der anderen Seite kann über den Anteil des Füllstoffs eine Mikroporösität im Zusammenspiel mit der Art der Verstreckung erzielt werden. Damit lässt sich die Permeabilität des Films und damit des Laminats gezielt einstellen. Beispielsweise kann das Laminat luftdicht oder aber luftdurchlässig sein, kaum dampfdurchlässig oder sehr stark dampfdurchlässig. Beispielsweise weist ein kaum dampfdurchlässiges Laminat vorzugsweise einen Bereich bis zu 12 g/m² x Tag, ein dampfdurchlässiges Laminat einen Bereich von etwa 1200 bis 2200 g/m² x Tag (Werte bei 23° C ermittelt) auf. Als Füllstoff wird beispielsweise Kreide oder Bariumsulfat genutzt.

Als vorteilhaft hat es sich erwiesen, dass das Verhältnis Flächengewichtvlies zu Flächengewichtfilm in einem Bereich zwischen 2:1 und 4:3 liegt. Beispielsweise weist das Laminat ein Gesamtgewicht von erster und zweiter Lage zwischen 35g/m² und 60g/m² auf. Es sind jedoch auch geringere bzw. höhere Flächengewichte für das Laminat möglich. Insbesondere kann sich das Flächengewicht erhöhen, wenn neben der ersten und der zweiten Lage zumindest eine zusätzliche dritte Lage vorgesehen ist.

Für eine besondere Weichheit des Laminats ist vorgesehen, dass das Polyethylen des Mantels des Bikomponentenspinnvlieses der ersten Lage ein LLDPE ist. Gemäß einer anderen Ausgestaltung ist vorgesehen, dass das Polyethylen des Mantels des Bikomponentenspinnvlieses der ersten Lage ein HDPE ist. Vorzugsweise weist das Bikomponentenspinnvlies Fasern auf, insbesondere besteht es aus Fasern, bei denen der Kern mindestens 80% der Querschnittsfläche und der Mantel höchstens 20% der Querschnittsfläche ausmacht. Gemäß einer weiteren vorteilhaften Ausgestaltung ist vorgesehen, dass der Kern etwa 85 Gew.-% der Spinnvliesfaser ausmacht, während der Mantel bis zu 15 Gew.-% der Spinnvliesfaser hat. Eine spezielle Ausgestaltung sieht vor, dass das Kern-Mantel-Verhältnis zwischen 40:60 und 70:30 beträgt. Ein derartiges Bikomponentenspinnvlies ist durch Einsatz eines speziellen Mantelextruders möglich, bei dem die Leistung des Extruders zumindest im selben Bereich liegt wie diejenige des Kern-Extruders. Darüber hinaus bedeutet ein derartiges Verhältnis spezielle Spinnplattengeometrien, um beispielsweise eine Kern-Mantel-Struktur von 50:50 schaffen zu können.

Vorzugsweise wird als Material für die zweite Lage ein LLDPE eingesetzt. Insbesondere wird ein Polyethylen genutzt, dessen MFR bei 190°C und 2,16 kg gemäß ISO 1133 zwischen 4 und 7 g/10 min beträgt. Insbesondere kann auch ein PE-Compound genutzt werden, das in diesem Wertebereich liegt.

Gemäß einem weiteren Gedanken der Erfindung wird ein Verfahren zur Herstellung eines Laminats, insbesondere eines Laminats wie oben beschrieben, zur Verfügung gestellt, wobei zur Herstellung eines Mantels eines Bikomponentenspinnvlieses ein Polyethylen verwendet wird, dessen MFI zwischen 16 g/10 min und 22 g/10 min nach ISO 1133 und dessen Dichte zwischen 0,92 g/cm³ und 0,98 g/cm³ liegt, während zur Herstellung eines Kerns des Bikomponenten-Spinnvlieses ein erstes Polypropylen verwendet wird, das eine Dichte zwischen 0,9 und 1 g/cm³ aufweist und einen MFI hat, der zwischen 300 und 500 g/10 min nach ISO 1133 liegt, und ein zweites Polypropylen, dessen MFR zwischen 21 und 29 g/min bei 230°C/2,16 kg gemäß ISO 1133 liegt. Mit einem derartigen Bikomponentenspinnvliesmaterial lässt sich eine Flexibilität erzielen, die ausreichend ist, eine Verbindung zwischen der ersten Lage aus dem Bikomponentenspinnfaservlies und der zweiten Lage aus insbesondere einem Polyethylenfilm auch bei hoher Dehnung weiter elastisch als Verbund sich wieder zusammenziehen zu lassen. Insbesondere gelingt es mit dieser Materialmischung, dass eine hohe Zugrate ermöglicht wird, d.h. dass einerseits an der ersten Lage, andererseits an der zweiten Lage gezogen wird. Durch die aufeinander abgestimmten Polymerkomponenten bleiben trotz hoher Zugkraft die beiden Lagen aneinander verbunden.

Eine Weiterbildung sieht vor, dass zur Herstellung des Kerns zusätzlich Polyethylen eingesetzt wird. Eine Ausgestaltung weist dabei ein Polyethylen auf, das einen MFI zwischen 13 und 23 g/min bei 190°C /2,16 kg gemäß ASTD 1238 aufweist.

Im Folgenden wird beispielhaft ein Laminat mit einer ersten Lage aus einem Bikomponentenspinnvlies und einem mikroporösen Film anhand von einigen möglichen Werten dargestellt. Beide Lagen sind vollflächig miteinander verbunden. Das Material wird vorzugsweise für eine Schutzbekleidung eingesetzt. Insbesondere kann das Material folgende Werte aufweisen:

| Eigenschaft | Testmethode | Einheit | Richtung | Durchschnitt |
|---|---|---|---|---|
| Gewicht | EN 29073 T1 | [g/m³] | - | 52 |
| | A4 | | | |
| Reißfestigkeit | EN 29073 T3 | [N/5 cm] | MD | 60 |
| (tensile strength) | I = 0,1 m | | CD | 35 |
| | v = 0,2 m/min | | | |
| Bruchdehnung | EN 29073 T3 | [%] | MD | 65 |
| bei Fₘₐₓ | I = 0,1 m | | CD | 55 |
| | v = 0,2 m/min | | | |
| Reißfestigkeit | ISO9073-4 | [N] | MD | 34,5 |
| (tear strength) | 75 mm | | CD | 58,5 |
| | v = 0,1 m/min | | | |
| Nagel-Festigkeit | DIN12310-1 | [N] | MD | 67 |
| (Nail Tear) | I = 0,1 m | | CD | 56 |
| 1 Nagel | v = 0,1 m/min | | | |
| Dicke | IS05084 - 1977 | [mm] | - | 0,5 |
| hydrostatische Höhe | DIN EN 20811 | [mbar] | - | 211 |
| (hydrostatic head) | | [cm] | | |
| Gradient 150mbar/min | | | | |
| Dampfdurchlässigkeit | ASTM E398 | [g/m² dy] | | 1857 |
| Standard: Goretex 500 | Typ B 38°C 5000 | | | |
| 85% rel. Feuchtigkeit | Typ D 23°C 2200 | | | |

Die angegebenen Werte stellen beispielhafte Angaben dar. Insbesondere kann das zumindest zweilagige Laminat zumindest jeweils einige der Werte zumindest erreichen, insbesondere auch übertreffen. Die angegebenen Werte stellen keine zwingenden Maximal- oder Minimalwerte dar. Vielmehr sind sie jeweils aus Bereichen herausgezogen, die für die einzelnen Werte jeweils vorteilhaft sind.

Vorzugsweise weist das Material eine Reißfestigkeit von zumindest 50 N/5 cm in MD und von mindestens 30 N/5 cm nach EN 29073 auf. Eine Dampfdurchlässigkeit des Laminats beträgt vorzugsweise zumindest 1400 g/m² . dy. Weiterhin ist bevorzugt das Material mit einer Nagelfestigkeit von zumindest 50 N in MD- wie auch in CD-Richtung ausgestaltet.

Das Vlies, der Film und/oder das Laminat kann zusätzlich mit Hydrophylierungsmittel, mit UV-Stabilisatoren, mit γ-Stabilisatoren, Flammhämmern und/oder Farbe, insbesondere Farbpigmenten, ausgerüstet werden. Dadurch lässt sich das Laminat für verschiedenste Einsatzbereiche einsetzen. Vorzugsweise ist das Laminat sterilisierbar. Neben einem Einsatz in Sicherheitsbekleidung, insbesondere Schutzbekleidung, kann das Material auch in Medikalanwendungen, beispielsweise bei Abdeckungen, bei Verbandsmaterial und OP-Bekleidung genutzt werden. Insbesondere ist das Material virendicht. Testmethoden wie auch Werte hierfür gehen aus der US 2003/124324 hiervor, auf die im Rahmen dieser Offenbarung diesbezüglich verwiesen wird.

Gemäß einer weiteren Ausgestaltung wird vorgesehen, dass über ein gezieltes Recken auch das Flächengewicht des Laminats eingestellt werden kann. Beispielsweise wird durch das Recken das Laminatgewicht um zumindest 20%, insbesondere um zumindest 30% und vorzugsweise um mehr als 40%, bezogen auf den Quadratmeter, verringert. Beispielsweise weist ein Ausgangsgewicht des Laminats vor dem biaxialen Verstrecken ein Flächengewicht von etwa 60 g/m² auf. Nach dem biaxialen Verstrecken weist das Laminat ein Flächengewicht von etwa 30 g/m² auf.

Gemäß einem weiteren Gedanken der Erfindung wird eine Anlage zur Herstellung eines Laminats mit zumindest einer ersten Lage aus Vlies und einer zweiten Lage aus einem Film zur Verfügung gestellt, wobei eine Zuführung für ein Filmmaterial einer Vlieszuführung nachgeordnet ist, sich eine erste Verstreckeinheit in MD-Richtung vor einer zweiten Verstreckeinheit in CD-Richtung anschließt, und eine elektrostatische Aufladung vorgesehen ist, um das Filmmaterial mit dem Vliesmaterial zu verbinden. Vorzugsweise ist vorgesehen, dass die Vlieszuführung mit einer Bikomponenten-Spinnvliesherstellungsvorrichtung gekoppelt ist und die Zuführung für das Filmmaterial mit einer Schmelzvorrichtung zum Aufschmelzen von Polyolefinmaterial für das Filmmaterial. Mittels einer derartigen Anlage gelingt es, kostengünstig ein Laminat, wie insbesondere oben beschrieben, herstellen zu können, da eine Zwischenlagerung von vorgefertigtem Vlies bzw. vorgefertigtem Film entfallen kann. Auch werden ansonsten notwendige Transportkosten für die vorgefertigten Waren nicht benötigt. Eine derartige Anlage eignet sich insbesondere für eine Fertigung just in time.

Vorzugsweise wird mit dieser Anlage ein Laminat hergestellt, welches flexibel ist. Ein hergestelltes Laminat weist beispielsweise in CD-Richtung eine Elastizität von zumindest 30% gemäß EN 29073, T3 bei einer Zuglänge von I=0,1 m und einer Geschwindigkeit von v=0,2 m/min bei Fₘₐₓ auf. Gemäß einer weiteren Ausgestaltung ist vorgesehen, dass das Laminat in MD-Richtung eine Elastizität von zumindest 40% gemäß EN 29073, T3 bei einer Zuglänge von I=0,1 m und einer Geschwindigkeit von v=0,2 m/min bei Fₘₐₓ aufweist.

Vorzugsweise weist das Laminat eine Wasserdampfdurchlässigkeit zwischen 1300 g/m³ dy und 2800 g/m³ dy gemäß ASTM E398, Testmethode D 23°C, 2200, auf. Insbesondere kann das Laminat auch nur soweit biaxial verstreckt sein, dass es weiterhin beispielsweise auch als Dampfsperre noch einsetzbar ist. Hierzu weist es eine Dampfdurchlässigkeit auf, die für Dampfsperren beispielsweise am Hausbereich, insbesondere Dachbereich vorgegeben sind. Gemäß einer Ausgestaltung ist beispielsweise vorgesehen, dass das Laminat einen S_{d}-Wert nach DIN 53122 von zwischen 1,6 bis 2,4, vorzugsweise von 2 m aufweist.

Vorteilhafterweise kann das Laminat in verschiedenartigen Produkten allein oder auch mit anderen Lagen eingesetzt werden. Insbesondere besteht die Möglichkeit, dass das Produkt nur oder im Wesentlichen nur aus dem Laminat besteht.

Gemäß einer Ausgestaltung wird das Laminat im Verpackungsbereich verwendet. Beispielsweise wird das Laminat vorher und/oder nachher, d.h. vor und/oder nach dem Einpackvorgang sterilisiert. Das Laminat, vorzugsweise die gesamte Verpackung ist sterilisierbar. Es besteht auch die Möglichkeit, dass die Verpackung mehrere Lagen aufweist, wobei nur ein Teil dieser Lagen sterilisierbar ist. Beispielsweise ist ein sterilisiertes Laminat im Inneren der Verpackung angeordnet, während ein Äußeres der Verpackung nicht sterilisiert bzw. nicht sterilisierbar ist.

Vorzugsweise wird eine Sterilisation mit Ethylenoxid ausgeführt. Gemäß einer anderen Ausgestaltung ist vorgesehen, eine Sterilisation mit überhitztem Wasserdampf vorzusehen. Eine andere Ausgestaltung sieht vor, dass eine Gamma-Bestrahlung vorgenommen wird, um für die notwendige Reinheit zu sorgen. Hierbei kann die Sterilisation zum Beispiel direkt nach der Herstellung des Laminats wie aber auch erst im Bereich einer Verpackungsanlage erfolgen. Des Weiteren besteht die Möglichkeit, dass die möglichen Sterilisationsweisen miteinander verbunden werden, je nach Bedarf.

Ein weiterer bevorzugter Anwendungsbereich des Laminats liegt im Baubereich. Das Laminat kann beispielsweise als Dampfsperre eingesetzt werden, insbesondere im Wand- und/oder Dachbereich. Auch besteht die Möglichkeit, dass das Laminat allein oder mit zumindest einer weiteren Lage im Hausbau Verwendung findet. Dieses kann wiederum im Dach und/oder im Wandbereich erfolgen. Beispielsweise kann hierzu die Luftdurchlässigkeit wie auch die Wasserdampfdurchlässigkeit gezielt für den jeweiligen Anwendungsfall eingestellt werden. Vorzugsweise ist das Laminat flüssigkeitsdicht.

Eine weitere bevorzugte Anwendung des Laminats betrifft die Verwendung in einer Schutzbekleidung. Beispielsweise kann eine gesamte Schutzbekleidung aus dem Laminat hergestellt werden. Auch kann nur ein Teil der Schutzbekleidung das Laminat aufweisen. Das Laminat selbst kann beispielsweise noch mit einer zusätzlichen Lage verbunden werden, insbesondere mit einer Filmlage. Besonders bevorzugt ist die Verwendung in Industrieschutzbekleidung nach Richtlinie 89/686/EWG Kategorie 3 für den Einsatz als Chemikalienschutzbekleidung gemäß Typ 3, 4, 5 oder 6. Vorzugsweise ist hierfür vorgesehen, dass das Laminat die für diese Schutzbekleidung vorgesehenen Prüfmerkmale erfüllt. Bezüglich dieser Anforderungen wird auf die entsprechenden Prüfklassifikationen prEN 1511, prEN 1512 bzw. EN 466 und EN 465 für die Typen 3 und 4 für Einfachnutzung bzw. Mehrfachnutzung verwiesen. Die Anforderungen für den Typ 5 gehen aus der prEN ISO 13982-1:2000-11 hervor. Die Anforderungen für den Typ 6 gehen aus prEN 13034:1997-09 hervor. Auf diese Klassifikationen wird im Umfange dieser Offenbarung als Merkmale der verwendeten Laminate verwiesen. Eine bevorzugte ChemikalienSchutzbekleidung sieht beispielsweise vor, dass darin ein Laminat Verwendung findet, welches die folgenden Parameter aufweist:
Scheuerfestigkeit nach EN 530: Mindestens 500 Touren,
Biegebeständigkeit nach ISO 7854: > 5000 Touren,
Durchstechfestigkeit nach EN 863: > 50 N,
Reißfestigkeit nach ISO 9073-4: > 60 N,
Berstfestigkeit nach ISO 2960: > 300 kPa,
Haftfestigkeit nach ISO 2411: > 500 N/m,
Chemikaliendichtheit nach EN 369: > 60 min,
Entflammbarkeit nach EN 146: Kein Weiterbrennen,
Nahtfestigkeit nach ISO 5082: > 75 N.

Vorzugsweise ist eine Chemikalienschutzbekleidung vollständig aus dem Laminat aufgebaut und weist zumindest die überwiegende Mehrzahl dieser Merkmale, insbesondere alle Merkmale auf.

Das Laminat kann für verschiedene Anwendungen auch entsprechend ausgerüstet werden. Die Ausrüstung kann beispielsweise mittels eines Additivzusatzes erfolgen. Des Weiteren besteht die Möglichkeit, dass ein Oberflächenauftrag erfolgt. Dieses kann beispielsweise über eine Sprayeinrichtung, über Walzen, über Nassflotten oder andere Auftragungsvorrichtungen erfolgen. Des Weiteren besteht die Möglichkeit, dass das Laminat einer Corona-Behandlung unterzogen wird. Dieses kann beispielsweise zur Einstellung spezieller Eigenschaften des Laminats erfolgen. Mögliche Ausrüstungen des Laminats, insbesondere durch Additivierung, sind insbesondere Antistatika, antimikrobielle Ausrüstungen, UV-beständige Ausrüstungen, Flammschutz, Alkoholabweisung, insbesondere bis 90 % Alkohol, und andere. Hierzu können verschiedenste Ausrüstungen bzw. Additivierungen Verwendung finden. Die Additivierung kann in nur einer Lage des Laminats wie aber auch in zumindest zwei Lagen bzw. in allen Lagen des Laminats vorliegen. Beispielsweise kann das Spinnvlies eine andere Ausrüstung aufweisen als der Film und umgekehrt. Dieses gilt insbesondere für die oben genannten Ausrüstungen.

Weitere Parameter, die die Schutzbekleidung erfüllt, gehen beispielsweise aus der US 5,869,193 hervor, auf die diesbezüglich im Rahmen der Offenbarung verwiesen wird. Auch gehen aus dieser Druckschrift spezielle Anzugsarten hervor, auf die ebenfalls verwiesen wird. Weiterhin wird auf die speziellen Werte für Schutzbekleidung bzw. -anzüge verwiesen, wie sie beispielsweise aus der WO 2005/002849, aus der WO 02/103099, aus der WO 2004/081271 und/oder aus der US 5,560,974 bzw. der WO 2003/124324 für jeweilige Lagen des Laminats bzw. für das Laminat als Ganzes hervorgehen.

Weitere vorteilhafte Ausgestaltungen und Weiterbildungen werden anhand der nachfolgenden Zeichnung näher erläutert. Die dabei dargestellten Merkmale sind jedoch nicht auf die einzelnen Ausgestaltungen beschränkt. Vielmehr können diese Merkmale mit anderen Merkmalen anderer Ausgestaltungen und/oder mit Merkmalen aus der obigen Beschreibung zu weiteren Ausgestaltungen verknüpft werden. Es zeigen:
- Fig. 1: in schematischer Ansicht einer Anlage zur Herstellung eines Laminats mit einer ersten und einer zweiten Lage,
- Fig. 2: in schematischer Ansicht ein erstes Laminat,
- Fig. 3: in schematischer Ansicht ein zweites Laminat,
- Fig. 4: in schematischer Ansicht ein drittes Laminat,
- Fig. 5: zeigt eine zweite Anlage in schematischer Ansicht zur Herstellung eines Laminats, und
- Fig. 6: zeigt eine dritte Anlage in schematischer Ansicht zur Herstellung eines Laminats.

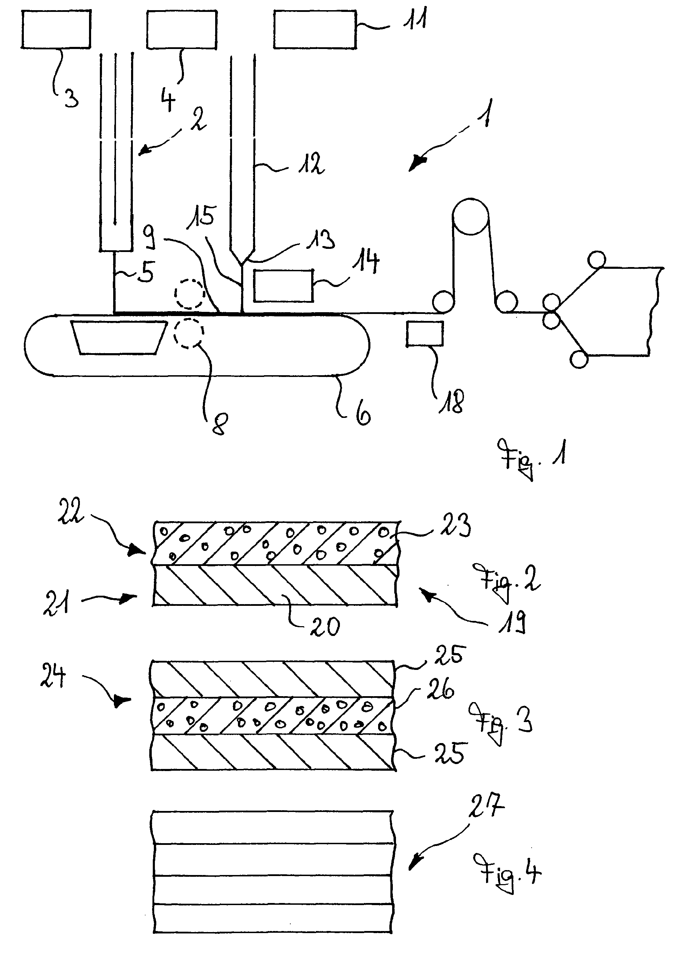

Fig. 1 zeigt in schematischer Ansicht eine erste Anlage 1 in beispielhafter Ausgestaltung zur Herstellung eines Laminats. Die erste Anlage 1 weist eine Bikomponenten-Spinnvliesanlage 2 auf. Dieses kann beispielsweise eine Spinnvliesanlage nach dem Prinzip einer Reicofill 2- oder einer Reicofill 3-Anlage in Verbindung mit einer Bikomponentenspinnplatte und entsprechender Polymerzuführung sein. Dazu weist die BikomponentenSpinnvliesanlage 2 einen ersten Extruder 3 und einen zweiten Extruder 4 auf. Damit können beispielsweise Kern-Mantel-Bikomponentenspinnvliesfasern erzeugt werden. Gemäß einer ersten Ausgestaltung ist der erste Extruder 3 kleiner ausgelegt als der zweite Extruder 4, wobei der zweite Extruder 4 für die Herstellung des Kerns zur Verfügung gestellt wird. Die hergestellten Spinnvliesfasern 5 werden auf einem luftdurchlässigen Band 6 abgelegt, wobei unterhalb der Ablage eine Absaugung 7 angeordnet ist. Nachfolgend zur Ablage der Spinnvliesfasern 5 folgt beispielsweise ein erster Kalander 8. Dieser verfestigt die Spinnvliesfasern 5 zum Spinnvlies 9. Der erste Kalander 8 kann jedoch auch entfallen, weswegen er nur gestrichelt dargestellt ist. Auf das Spinnvlies 9 wird ein Filmmaterial 10 aufgebracht. Das Filmmaterial 10 wird über einen dritten Extruder 11 aufgeschmolzen und sodann über eine Filmerzeugungseinheit über eine Schlitzdüse 13 aufgetragen. Vorzugsweise wird hierbei eine elektrostatische Aufladung 14 genutzt. Dadurch gelingt ein besonders guter Verbund zwischen der ersten Lage aus Spinnvlies 9 und der zweiten Lage aus dem gebildeten Film 15. Anschließend folgt beispielsweise eine Verstreckung in MD-Richtung über eine MD-Verstreckeinheit 16, an die sich eine CD-Verstreckeinheit 17 anschließt. Diese nur beispielhaft angegebene Ausgestaltung der ersten Anlage 1 kann in dieser oder in ähnlicher Art und Weise aufgebaut sein. Beispielsweise können das Vlies wie auch der Film als jeweils vorgefertigte Lagen zugeführt werden. Zusätzlich können auch ein oder mehrere Bindestationen 18 zusätzlich oder alternativ zum ersten Kalander 8 bzw. zur elektrostatischen Aufladung 14 zur Verbindung der ersten und der zweiten Lage vorgesehen sein.

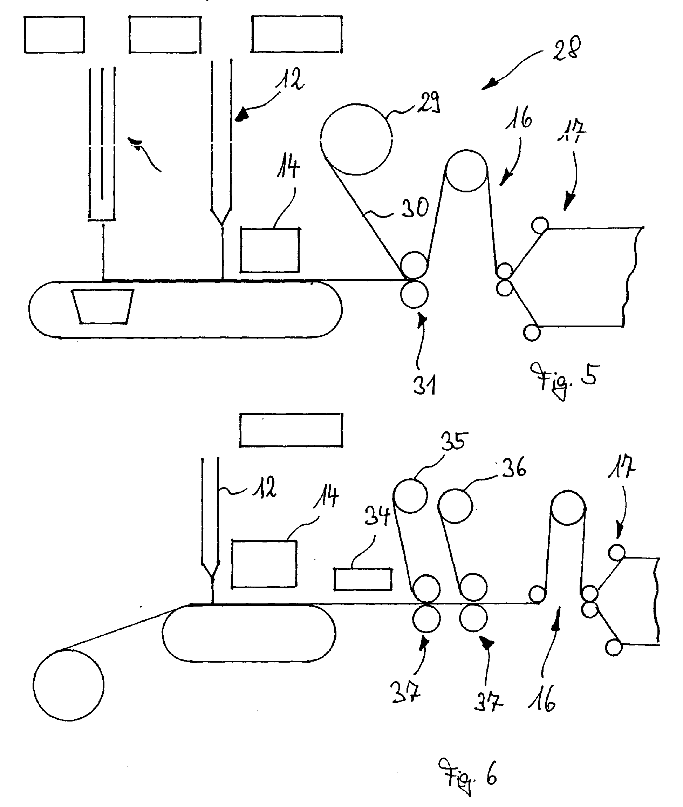

Fig. 2 zeigt in beispielhafter Ausgestaltung ein erstes Laminat 19 mit einer ersten Lage 20 aus einem Spinnvlies und einer zweiten Lage 22 aus einem wasserundurchlässigen Film 23. Der Film ist insbesondere mit Füllstoff versetzt. Durch ein Verrecken können sich dabei Mikroporösitäten einstellen. Auf diese Weise kann der wasserundurchlässige Film 23 gezielt wasserdampfdurchlässig eingestellt werden. Wird insbesondere ein elastisches Spinnvlies 21 und ein elastischer Film 23 verwendet, können diese beispielsweise über die biaxiale Verstreckeinheit aktiviert werden.

Fig. 3 zeigt ein zweites Laminat 24 mit jeweils zwei außen gelagerten Spinnvlieslagen 25 und einer Mittellage 26. Vorzugsweise ist eines der beiden Spinnvlieslagen 25 durch einen Thermobondingprozess, durch ein Klebeverfahren und/oder durch ein Ultraverschweißen mit der Mittellage 26 verbunden. Die Mittellage 26 ist vorzugsweise ein Film, der mit der anderen Spinnvlieslage 25 vorzugsweise zumindest über eine elektrostatische Aufladung 14 vollflächig verbunden ist. Insbesondere kann auf diese Weise ein zweites Laminat 24 geschaffen werden, bei der eine Seite der Mittellage 26 vollflächig verbunden ist, während die gegenüberliegende Seite der Mittellage 26 nicht vollständig, sondern insbesondere intermitierend und damit diskontinuierlich mit einer angrenzenden Lage in Verbindung steht. Eine andere Ausgestaltung sieht hingegen vor, dass die Mittellage im noch erhitzten thermoplastischen Zustand auf einer ersten Lage angeordnet wird und eine weitere Lage auf dem noch nicht ausgehärteten Filmmaterial zu liegen kommt. Vorzugsweise ist das Filmmaterial noch so temperiert, dass es zumindest an der Oberfläche eine Temperatur oberhalb der Erweichungstemperatur aufweist. Somit kann auch auf diese Weise die noch aufgebrachte Lage eine vollflächige Verbindung aufweisen.

Fig. 4 zeigt in beispielhafter Ausgestaltung ein drittes Laminat 27, wobei vier Lagen vorhanden sind. Die Lagen sind vorzugsweise zwei Spinnvlieslagen, eine Filmlage und ein Gelege. Das Gelege kann insbesondere ein elastisches Gitter sein. Insbesondere können dabei die beiden Spinnvlieslagen jeweils die Außenlagen bilden, während die Filmlage und die Gelegelage zwischen den Spinnvlieslagen angeordnet sind. Auch besteht die Möglichkeit, dass beispielsweise die Filmlage außen angeordnet ist, während die Spinnvlieslagen das Gelege gegenüber dem Film einbetten. Eine weitere Ausgestaltung sieht vor, dass die Gelegelage außen angeordnet sind, während die beiden Spinnvlieslagen den Film in ihrer Mitte einbetten.

Fig. 5 zeigt in schematischer Ansicht eine beispielhafte zweite Anlage 28 zur Herstellung eines Laminats. Dieser Aufbau ist ebenfalls nur als eine der verschiedenen Variationen zu verstehen. Die zweite Anlage 28 weist ebenfalls eine Bikomponentenspinnvliesanlage 2 sowie eine Filmerzeugungseinheit 12 und eine elektrostatische Aufladung 14 auf, wie sie schon aus Fig. 1 hervorgehen. Zusätzlich ist ein Abwickler 29 angeordnet, von dem ein vorgefertigtes Vlies 30 einer nachgeordneten Bonding-Station 31 insbesondere in Form eines Thermobondingkalanders nachfolgt. Anschließend ist eine MD-Verstreckeinheit 16 und eine CD-Verstreckeinheit 17 angeordnet.

Fig. 6 zeigt eine dritte Anlage 32 in beispielhafter Ausgestaltung. Hierbei wird von einer ersten Abwicklerstation 33 ein Vlies zu der Filmerzeugungseinheit 12 und der elektrostatischen Aufladung 14 zugeführt. Beispielsweise kann über eine Wärmevorrichtung 34 das thermoplastische Material, das aus der Filmerzeugungseinheit 12 auf das Vlies aufgetragen ist, weiter aufgeheizt bleiben, so dass die Oberfläche des thermoplastischen Materials noch eine Temperatur oberhalb der Erweichungstemperatur aufweist. Beispielsweise kann eine zweite Abwicklerstation 35 und/oder eine dritte Abwicklerstation 36 folgen. Von der zweiten Abwicklerstation 35 wird beispielsweise ein Gitter und von der dritten Abwicklerstation 36 wird beispielsweise ein zusätzliches Vlies dem thermoplastischen Material zugeführt. Beispielsweise können ein oder mehrere Bondingstationen 37 vorgesehen sein. Anschließend wird das Laminat wiederum über eine MD-Verstreckeinheit 16 und eine CD-Verstreckeinheit 17 biaxial verstreckt.

## Patentansprüche

1. Laminat mit zumindest einer ersten Lage aus einem Spinnvlies aus thermoplastischem Polyolefinmaterial und einer zweiten Lage aus einem flüssigkeitsundurchllässigen und dampfdurchlässigen Film aus Polyolefinmaterial, wobei die erste und die zweite Lage miteinander verbunden, biaxial verstreckt und elastisch sind.

2. Laminat nach Anspruch 1, **dadurch gekennzeichnet, dass** die erste und die zweite Lage vollflächig miteinander verbunden sind.

3. Laminat nach Anspruch 1 oder 2, **dadurch gekennzeichnet, dass** das Spinnvlies ein Bikomponentenvlies ist und einen Kern aufweist, der im Wesentlichen Polypropylen aufweist, und einen Mantel aus Polyethylen hat, wobei der Film der zweiten Lage mikroporös und aus Polyethylen ist.

4. Laminat nach Anspruch 1, 2 oder 3, **dadurch gekennzeichnet, dass** das Spinnvlies im Kern Polypropylen und Polyethylen aufweist.

5. Laminat nach einem der vorhergehenden Ansprüche, **dadurch gekennzeichnet, dass** das Kernmaterial des Vlieses zumindest 90 % Polypropylen aufweist und ein Anteil des Kernmaterials Polyethylen ist.

6. Laminat nach einem der vorhergehenden Ansprüche, **dadurch gekennzeichnet, dass** der Film ein Polyethylen-Compound ist, der zumindest zu 30 Gew.-% mit einem Füllstoff gefüllt ist.

7. Laminat nach einem der vorhergehenden Ansprüche, **dadurch gekennzeichnet, dass** das Verhältnis Flächengewicht Spinnvlies zu Flächengewicht Film in einem Bereich zwischen 2:1 und 4:3 liegt.

8. Laminat nach einem der vorhergehenden Ansprüche, **dadurch gekennzeichnet, dass** das Gesamtgewicht der ersten und der zweiten Lage zwischen 35 g/m² und 60 g/m² liegt.

9. Laminat nach einem der vorhergehenden Ansprüche, **dadurch gekennzeichnet, dass** das Polyethylen des Mantels der Spinnvliesfasern der ersten Lage ein LLDPE ist.

10. Laminat nach einem der vorhergehenden Ansprüche, **dadurch gekennzeichnet, dass** das Polyethylen des Mantels der Spinnvliesfasern der ersten Lage ein HDPE ist.

11. Laminat nach einem der vorhergehenden Ansprüche, **dadurch gekennzeichnet, dass** das Polyethylen des Films ein LLDPE ist.

12. Laminat nach einem der vorhergehenden Ansprüche, **dadurch gekennzeichnet, dass** das Laminat flexibel ist.

13. Laminat nach einem der vorhergehenden Ansprüche, **dadurch gekennzeichnet, dass** das Laminat in CD-Richtung eine Elastizität mit einer Bruchdehnung von zumindest 30 % gemäß EN 29073, T3 bei einer Zuglänge von I = 0,1 m und einer Geschwindigkeit von v = 0,2 m/min bei Fₘₐₓ aufweist.

14. Laminat nach einem der vorhergehenden Ansprüche, **dadurch gekennzeichnet, dass** das Laminat in MD-Richtung eine Elastizität mit einer Bruchdehnung von zumindest 40 % gemäß EN 29073, T3 bei einer Zuglänge von I = 0,1 m und einer Geschwindigkeit von v = 0,2 m/min bei Fₘₐₓ aufweist.

15. Laminat nach einem der vorhergehenden Ansprüche, **dadurch gekennzeichnet, dass** das Laminat eine Wasserdampfdurchlässigkeit zwischen 1300 g/m²dy und 2800 g/m²dy gemäß ASTM E 398, Testmethodik D23°C 2200 aufweist.

16. Verfahren zur Herstellung eines flüssigkeitsundurchlässigen Laminats mit einer ersten Lage aus einem Vlies und einer zweiten Lage aus einem Film, **dadurch gekennzeichnet, dass** zur Herstellung eines Mantels eines Bikomponenten-Spinnvlieses ein Polyethylen verwendet wird, dessen MFI zwischen 16 und 25 g/10 min nach ISO 1133 und dessen Dichte zwischen 920 kg/m³ und 980 kg/m³ liegt, während zur Herstellung eines Kerns des Bikomponenten-Spinnvlieses ein erstes Polypropylen verwendet wird, das eine Dichte zwischen 0,9 und 1 g/cm³ aufweist und einen MFI hat, der zwischen 300 und 800 g/10 min nach ISO 1133 liegt, und ein zweites Polypropylen, dessen MFR zwischen 19 und 29 dg/min bei 230°C/2,16 kg gemäß ISO 1133 liegt.

17. Verfahren zur Herstellung eines Laminats nach Anspruch 16, wobei aufgeschmolzenes Filmmaterial zu einem Film gegossen wird, wobei der Film unter elektrostatischer Einwirkung auf das Vlies aufgebracht wird und das Laminat anschließend verpresst wird, bevor es verstreckt wird.

18. Verfahren nach Anspruch 16 oder 17, **dadurch gekennzeichnet, dass** zur Herstellung des Kerns zusätzlich Polyethylen eingesetzt wird.

19. Verfahren nach Anspruch 18, **dadurch gekennzeichnet, dass** ein Polyethylen eingesetzt wird, das einen MFI zwischen 19 und 23 dg/min bei 190°C und 2,16 kg gemäß ASTMD 1238 aufweist.

20. Verfahren nach einem der Ansprüche 16 bis 19, **dadurch gekennzeichnet, dass** mit einem biaxialen Verstrecken ein Zielgewicht des Laminats hergestellt wird.

21. Anlage zur Herstellung eines Laminats mit zumindest einer ersten Lage aus Vlies und einer zweiten Lage aus einem Film, wobei eine Zuführung für ein Filmmaterial einer Vlieszuführung nachgeordnet ist und sich eine erste Verstreckeinheit in MD-Richtung vor einer zweiten Verstreckeinheit in CD-Richtung anschließt, und eine elektrostatische Aufladung vorgesehen ist, um das Filmmaterial mit dem Vliesmaterial zu verbinden.

22. Anlage nach Anspruch 21, **dadurch gekennzeichnet, dass** die Vlieszuführung mit einer Bikomponenten-Spinnvliesherstellungsvorrichtung gekoppelt ist und die Zuführung für das Filmmaterial mit einer Schmelzvorrichtung zum Aufschmelzen von Polyolefinmaterial für das Filmmaterial.

23. Sterilisationsverpackung, aufweisend ein Laminat nach einem der vorhergehenden Ansprüche.

24. Bauprodukt, aufweisend ein Laminat nach einem der vorhergehenden Ansprüche.

25. Industrieschutzbekleidung, insbesondere Chemikalienschutzbekleidung, aufweisend ein Laminat nach einem der vorhergehenden Ansprüche.
